# EUROPÄISCHE PATENTSCHRIFT

(11) **EP 4 172 588 B1**
(45) Veröffentlichungstag und Bekanntmachung des Hinweises auf die Patenterteilung: **18.06.2025**
(21) Anmeldenummer: 21735882.9
(22) Anmeldetag: 17.06.2021
(51) Int. Cl.: G01M 13/027

(54) **ANTRIEBSSTRANGPRÜFSTAND MIT VERSTELLBARER PRÜFLINGSAUFNAHME**
DRIVETRAIN TEST BENCH WITH ADJUSTABLE TEST OBJECT HOLDER
BANC D'ESSAI DE TRANSMISSION AVEC SUPPORT D'OBJET D'ESSAI RÉGLABLE

(30) Priorität: 29.06.2020 DE 102020208040
(43) Veröffentlichungstag der Anmeldung: 03.05.2023
(73) Patentinhaber: ZF Friedrichshafen AG, 88046 Friedrichshafen (DE)
(72) Erfinder: HELL, Christian, 94107 Untergriesbach (DE)
(86) Internationale Anmeldenummer: PCT/EP2021/066433
(87) Internationale Veröffentlichungsnummer: WO 2022/002614

(56) Entgegenhaltungen:
- EP-A1- 3 081 915
- DE-A1- 102018 127 572

## Beschreibung

Die Erfindung betrifft einen Antriebsstrangprüfstand gemäß dem Oberbegriff von Anspruch 1.

Getriebeprüfstände bzw. Antriebsstrangprüfstände zum Prüfen von Kraftfahrzeuggetrieben bzw. von vollständigen Kraftfahrzeugantriebssträngen sind aus dem Stand der Technik bekannt. Derartige Prüfstände werden üblicherweise verwendet, um Funktionsstörungen in Antriebssträngen frühzeitig durch eine Reihe von Belastungstests zu erkennen. Darüber hinaus finden derartige Prüfstände aber auch in der Entwicklung und stetigen Verbesserung von Kraftfahrzeugantriebssträngen sowie insbesondere Kraftfahrzeuggetrieben Verwendung. In der Regel sind die bekannten Prüfstände zum Prüfen verbrennergetriebener Kraftfahrzeugantriebsstränge ausgebildet.

Die zum Prüfen verbrennergetriebener Kraftfahrzeugantriebsstränge geeigneten Prüfstände sind dabei typischerweise nicht zum Prüfen von elektrischen Antriebssträngen geeignet, da elektrische Antriebsstränge mit deutlich höheren Drehzahlen von mehr als 10.000 U/min angetrieben werden. Es bestehen daher besondere Anforderungen hinsichtlich der Steifigkeit und Schwingungsdämpfung an Antriebsstrangprüfstande für elektrische Kraftfahrzeugantriebe. Hinzu kommt, dass elektrische Antriebsstränge aufgrund der hohen Drehzahlen im Prüfstand sehr präzise ausgerichtet werden müssen.

In diesem Zusammenhang beschreibt die DE 10 2016 224 142 A1 einen modular aufbaubaren Antriebsstrangprüfstand für elektrische Kraftfahrzeugantriebe, der besonders steif und schwingungsdämpfend ausgebildet ist. Gleichzeitig erlaubt er eine präzise Ausrichtung des Getriebes zu einer Antriebseinheit des Prüfstands.

Die EP 3 081 915 A1 offenbart eine Lagerprüfmaschine, umfassend eine Prüfmaschinenwelle, an der ein Lager, das ein Prüfstück darstellt, befestigt ist, wobei die Prüfmaschinenwelle eine Rotationswelle ist, die sich horizontal in Y-Achsenrichtung erstreckt. Weiterhin umfasst die Lagerprüfmaschine eine Drehantriebseinheit, die dazu konfiguriert ist, die Welle der Prüfmaschine zu drehen, eine Teststück-Halteeinheit, die so konfiguriert ist, dass sie das Teststück elastisch hält und mehrere Achsantriebseinheiten, die so konfiguriert sind, dass sie die Welle der Prüfmaschine vertikal in Z-Achsenrichtung sowie horizontal in X- und Y-Achsenrichtung bewegen können, wobei die X-Achsenrichtung orthogonal zur Y-Achsenrichtung ist. Die Welle ist zudem um die Z-Achse und die X-Achse kippbar.

Aus der DE 10 2018 127 572 A1 ist ein Schwenkrahmen für einen Prüfstand für einen Antriebsstrang bekannt, mit einem Tragrahmen, einer relativ zu dem Tragrahmen bewegbaren Motoraufnahme, auf der ein Antriebsmotor befestigbar ist, und mit einer, bezogen auf eine Hauptrichtung, vorderen Hebeeinrichtung und einer hinteren Hebeeinrichtung. Die Motoraufnahme wird bei einem Bewegen relativ zu dem Tragrahmen durch die vordere Hebeeinrichtung und die hintere Hebeeinrichtung getragen, wobei die Motoraufnahme durch die Hebeeinrichtungen um eine vordere Schwenkachse und um eine hintere Schwenkachse relativ zu dem Tragrahmen verschwenkbar ist.

Die bekannten Prüfstände für elektrische Kraftfahrzeugantriebsstränge sind jedoch insofern nachteilbehaftet, als dass diese unter hohem Zeitaufwand präzise für die jeweils zu prüfenden Antriebsstränge justiert werden müssen.

Es ist eine Aufgabe der vorliegenden Erfindung, einen verbesserten Antriebsstrangprüfstand vorzuschlagen.

Diese Aufgabe wird erfindungsgemäß durch den Antriebsstrangprüfstand gemäß Anspruch 1 gelöst. Vorteilhafte Ausgestaltungen ergeben sich aus den Unteransprüchen.

Die Erfindung betrifft einen Antriebsstrangprüfstand zum Prüfen eines elektrischen Fahrzeugantriebs, umfassend ein Antriebsmodul und eine verstellbare Prüflingsaufnahme für einen Antriebsstrangprüfstand, wobei die Prüflingsaufnahme und das Antriebsmodul über einen gemeinsamen Sockel miteinander verbunden sind, wobei das Antriebsmodul einen Elektromotor einhaust, wobei die Prüflingsaufnahme eine erste Fläche und eine zur ersten Fläche parallele zweite Fläche aufweist, wobei die Prüflingsaufnahme über die erste Fläche auf einem Untergrund anordbar ist, wobei auf der zweiten Fläche ein Prüfling anordbar ist und wobei die Prüflingsaufnahme derart ausgebildet ist, dass die zweite Fläche gegenüber der ersten Fläche entlang einer Längsachse, einer Höhenachse und einer Querachse verstellbar ist. Die die Prüflingsaufnahme ist weiterhin derart ausgebildet, dass die zweite Fläche gegenüber der ersten Fläche zumindest um die Höhenachse und die Querachse kippbar ist, wobei das Antriebsmodul einen Flansch umfasst, wobei der Elektromotor über den Flansch den Prüfling antreiben kann und die zu koppelnden Achsen des Prüflings und des Elektroantriebs versatzfrei ausrichtbar sind.

Es ist also eine Prüflingsaufnahme vorgesehen, die als Bestandteil eines Antriebsstrangprüfstands zum Aufnehmen eines Prüflings geeignet ist. Bei dem Prüfling handelt es sich bevorzugt um ein Fahrzeuggetriebe, insbesondere um ein Fahrzeuggetriebe für ein elektrisch angetriebenes Fahrzeug. Ein derartiges Fahrzeuggetriebe für ein elektrisch angetriebenes Fahrzeug unterscheidet sich von einem Fahrzeuggetriebe für verbrennergetriebene Fahrzeuge vor allem durch die Auslegung auf deutlich höhere Eingangsdrehzahlen von über 10.000 U/min. Zudem weist ein Fahrzeuggetriebe für ein elektrisch angetriebenes Fahrzeug in der Regel vergleichsweise weniger schaltbare Gangstufen auf. Es kann sich bei dem Prüfling aber auch nicht nur ausschließlich um das Fahrzeuggetriebe handeln sondern beispielsweise um das Fahrzeuggetriebe mit daran angeschlossenen Abtriebswellen und Verteilergetrieben bis hin zu den einzelnen Radantriebswellen. Ebenso ist es denkbar und bevorzugt, dass es sich bei dem Prüfling ausschließlich um einen elektrischen Antriebsmotor für ein elektrisch angetriebenes Fahrzeug handelt. In diesem Fall kann der elektrische Antriebsmotor insbesondere einem sog. "Back-to-Back"-Test unterworfen werden, d.h. einem Belastungstest, in dem der elektrische Antriebsmotor für das elektrisch angetriebene Fahrzeug direkt mit einem Antrieb des Antriebsstrangprüfstands gekoppelt ist. Bei dem Antrieb des Antriebsstrangprüfstands handelt es sich ebenfalls um einen Elektromotor. Weil als Kopplungselement zwischen dem Prüfling und dem Antrieb des Antriebsstrangprüfstands eine Kupplung verwendet wird, ist es erforderlich, den Prüfling möglichst exakt zum Antrieb auszurichten. Eine Kupplung eignet sich vorteilhaft zum Übertragen von hohen Drehzahlen, wie sie für elektrische Antriebsstränge üblich sind, erfordert jedoch eine versatzfreie Ausrichtung der zu koppelnden Achsen. Um diese möglichst exakte Ausrichtung zu gewährleisten ist neben einer Verstellbarkeit der zweiten Fläche entlang der Längsachse, der Höhenachse und der Querachse gegenüber der ersten Fläche erfindungsgemäß auch eine Verkippbarkeit der zweiten Fläche um die Höhenachse und die Querachse gegenüber der ersten Fläche vorgesehen. Somit kann eine weitestgehend optimale Ausrichtung des Prüflings zuverlässig und auf einfache Weise gewährleistet werden. Insbesondere das Auftreten unerwünschter Schwingungen aufgrund einer ungenügenden Ausrichtung kann so vermieden werden.

Die erste Fläche und die zweite Fläche der Prüflingsaufnahme sind bevorzugt metallisch ausgebildet und im Wesentlichen plan. Sie können Schlitze bzw. Öffnungen aufweisen oder auch großflächige Aussparungen. Die erste Fläche bildet dabei eine Unterseite der Prüflingsaufnahme, auf welcher die Prüflingsaufnahme abgestellt werden kann. Schlitze bzw. Öffnungen in der ersten Fläche sind vorteilhaft dazu vorgesehen, eine Befestigung an einem Sockel für die Prüflingsaufnahme zu ermöglichen. Auch eine vergleichsweise großflächige Aussparung ist bevorzugt, beispielsweise zur Gewichtsreduzierung. Die zweite Fläche bildet eine Oberseite der Prüflingsaufnahme, auf welcher der Prüfling angeordnet werden kann. Vorteilhaft kann mittels der Schlitze bzw. Öffnungen in der zweiten Fläche eine Vielzahl von Halterungen, insbesondere vier Halterungen, zum Einspannen des Prüflings angeordnet werden. Die erste und die zweite Fläche sind bevorzugt rechteckig ausgebildet.

Bei der Längsachse, der Höhenachse und der Querachse handelt es sich um drei zueinander orthogonale Achsen, wobei die Längsachse eine Richtung entlang der langen Seitenkante der ersten Fläche definiert, die Querachse eine Richtung entlang der kurzen Seitenkante der ersten Fläche definiert und die Höhenachse senkrecht auf der ersten Fläche steht.

Gemäß einer bevorzugten Ausführungsform der Erfindung ist es vorgesehen, dass die zweite Fläche gegenüber der ersten Fläche entlang der Höhenachse mittels mindestens zweier verschiebbarer Keile verstellbar ist. Die mindestens zwei Keile sind dabei bevorzugt identisch ausgebildet. Sie weisen einen dreieckigen Querschnitt auf und besitzen zwei lange Seitenkanten und eine kurze Seitenkante. Daraus ergibt sich zunächst der Vorteil, dass die erste Fläche und die zweite Fläche also über die mindestens zwei Keile miteinander verbunden sind, indem die erste Fläche an jeweils eine lange Seitenkante der Keile anliegt und die zweite Fläche an jeweils die andere lange Seitenkante der Keile anliegt. Durch die solcherart vergleichsweise großen Anlegeflächen ergibt sich eine schwingungsdämpfende und steife Verbindung der ersten Fläche mit der zweiten Fläche.

Jeder Keil ist dabei bevorzugt über ein Spindelgewinde entlang der ersten Fläche bzw. der zweiten Fläche verschiebbar, insbesondere entlang einer Schräge der ersten Fläche bzw. der zweiten Fläche verschiebbar, so dass sich abhängig von der Position der Keile eine Verschiebung der ersten Fläche entlang der Höhenachse gegenüber der zweiten Fläche ergibt. Durch das Verschieben der Keile wird somit auf sehr einfache Art und Weise eine vergleichsweise feine Einstellung der Höhe der zweiten Fläche gegenüber der ersten Fläche ermöglicht. Insbesondere ist es nicht erforderlich, wie im Stand der Technik oftmals üblich, mittels Unterlegleisten die gewünschte Höhe der zweiten Fläche gegenüber der ersten Fläche einzustellen.

Gemäß einer weiteren bevorzugten Ausführungsform der Erfindung ist es vorgesehen, dass die mindestens zwei Keile auf einer ersten Zwischenplatte angeordnet sind, wobei die erste Zwischenplatte insbesondere eine Schrägung auf ihrer Oberseite aufweist, welcher einer Schrägung der Keile derart entgegengesetzt entspricht, dass eine Unterseite der ersten Zwischenplatte und jeweils eine lange Seitenkante der mindestens zwei Keile parallel zueinander sind. Durch Heranziehen der ersten Zwischenplatte ergibt sich der Vorteil, dass Verstellmöglichkeiten bzw. Kippmöglichkeiten der zweiten Fläche gegen die erste Fläche entlang weitere Achsen nicht beeinträchtigt werden.

Gemäß einer weiteren bevorzugten Ausführungsform der Erfindung ist es vorgesehen, dass die mindestens zwei verschiebbaren Keile an der ersten Fläche oder an der zweiten Fläche verschiebefest angeordnet sind und an der jeweils anderen Fläche auf einer dafür vorgesehenen Schräge verschiebbar sind, so dass ein Verschieben der mindestens zwei Keile gleichzeitig zu einem Verstellen der ersten Fläche entlang der Höhenachse und entlang der Querachse oder der Längsachse führt. Indem die mindestens zwei Keile entweder an der ersten Fläche oder an der zweiten Fläche verschiebefest angeordnet sind, verschiebt die erste oder die zweite Fläche entsprechend gemeinsam mit den mindestens zwei Keilen. Das führt dazu, dass durch das Verschieben der mindestens zwei Keile entlang der Schräge nicht nur ein Verschieben entlang der Höhenachse erfolgt, sondernd darüber hinaus auch entlang der Querachse bzw. der Längsachse.

Gemäß einer weiteren besonders bevorzugten Ausführungsform der Erfindung ist es vorgesehen, dass die mindestens zwei Keile jeweils auf ihrer der zweiten Fläche zugewandten Seitenkante eine sich über die Seitenkante erstreckende Wölbung aufweisen. Die Wölbung kann dabei z.B. im Querschnitt als Kreisbogen ausgebildet sein und sich über die vollständige Länge oder eine anteilige Länge der Seitenkante des jeweiligen Keils erstrecken. Daraus ergibt sich der Vorteil, dass die zweite Fläche mit jedem der mindestens zwei Keile nicht über zwei aneinander anliegende Flächen verbunden ist, sondern dass vielmehr nur jeweils eine Kontaktlinie besteht, an welcher die zweite Fläche an jedem der mindestens zwei Keile anliegt. Ebenso ist es denkbar, dass die Wölbung sich mit Unterbrechungen über die der zweiten Fläche zugewandten Seitenkante des jeweiligen Keils erstreckt, insbesondere können sie Wölbungen sogar Kugelsegmente sein. Somit können beispielsweise bei einem Verschieben eines oder mehrerer Keile auftretende, geringfüge Verkantungen der Keile hinsichtlich der Ausrichtung der zweiten Fläche auf dem entsprechenden Keil ausgeglichen werden.

Gemäß einer weiteren besonders bevorzugten Ausführungsform der Erfindung ist es vorgesehen, dass eine Position der mindestens zwei Keile mittels mindestens eines Tiefenmessschiebers erfassbar ist. Somit kann also die Position der mindestens zwei Keile auf einfache Weise erfasst werden. Die die Verschiebung der zweiten Fläche gegenüber der ersten Fläche entlang der Höhenachse durch die Position der Keile geprägt ist, kann somit auf einfache Weise auch die Höhe der zweiten Fläche über der ersten Fläche bestimmt werden.

Bevorzugt ist für jeden Keil ein eigener Tiefenmessschieber vorgesehen.

Gemäß einer weiteren bevorzugten Ausführungsform der Erfindung ist es vorgesehen, dass die zweite Fläche gegenüber der ersten Fläche entlang der Längsachse mittels eines Längsspindeltriebs und entlang der Querachse mittels eines Querspindeltriebs verstellbar ist. Spindeltriebe erlauben eine präzise und zuverlässige Verschiebung der zweiten Fläche gegen die erste Fläche. Der Längsspindeltrieb kann dabei beispielsweise zwischen der ersten Fläche und der zweiten Fläche entlang der Längsachse angeordnet sein und der Querspindeltrieb kann beispielsweise zwischen der ersten Fläche und der zweiten Fläche entlang der Quersachse angeordnet sein.

Gemäß einer weiteren bevorzugten Ausführungsform der Erfindung ist es vorgesehen, dass die zweite Fläche gegenüber der ersten Fläche mittels mindestens eines Keils der mindestens zwei Keile um die Querachse kippbar ist. Dazu wird lediglich einer der mindestens zwei Keile verschoben, bzw. die mindestens zwei Keile werden unterschiedlich weit verschoben, so dass die Keile eine unterschiedliche Beabstandung der ersten Fläche zur zweiten Fläche herstellen und die zweite Fläche entsprechend gegenüber der ersten Fläche geneigt wird. Wenn die mindestens zwei Keile mit einer Beabstandung zueinander entlang der Querachse angeordnet und verschiebbar sind, kann somit ein Verkippen der zweiten Fläche entlang der Querachse ermöglicht werden.

Gemäß einer weiteren bevorzugten Ausführungsform der Erfindung ist es vorgesehen, dass die zweite Fläche gegenüber der ersten Fläche mittels eines Kippspindeltriebs um einen Lagerpunkt um die Höhenachse kippbar ist. Der Kippspindeltrieb kann dabei beispielsweise an einem Längsende der Prüflingsaufnahme angeordnet sein. Durch Verstellen des Kippspindeltriebs kann dann die erste Fläche um die Höhenachse gekippt werden, wobei der Drehpunkt der Lagerpunkt ist.

Gemäß einer besonders bevorzugten Ausführungsform der Erfindung ist es vorgesehen, dass Lagerpunkt als Drehlagerung zwischen der ersten Fläche und einer zweiten Zwischenplatte oder zwischen der zweiten Fläche und der zweiten Zwischenplatte vorgesehen ist. Durch Heranziehen der zweiten Zwischenplatte ergibt sich der Vorteil, dass Verstellmöglichkeiten bzw. Kippmöglichkeiten der zweiten Fläche gegen die erste Fläche entlang weitere Achsen nicht beeinträchtigt werden.

Gemäß einer besonders bevorzugten Ausführungsform der Erfindung ist es vorgesehen, dass der Lagerpunkt in einem äußeren Viertel der Länge der Prüflingsaufnahme angeordnet ist. Da der Lagerpunkt den Drehpunkt darstellt, um den die erste Fläche gedreht wird, befindet sich entsprechend auch der Drehpunkt in einem äußeren Viertel der Länge der Prüflingsaufnahme.

Bevorzugt ist der Lagerpunkt in einem dem Kippspindeltrieb abgewandten äußeren Viertel der Länge der Prüflingsaufnahme angeordnet. Das bedeutet also, dass die Prüflingsaufnahme in Längsrichtung oder in Querrichtung in vier gedachte Viertel unterteilt wird, wobei in einem äußeren Viertel der Lagerpunkt angeordnet ist. Dieses Viertel ist abgewandt vom dem anderen äußeren Viertel, an welchem der Kippspindeltrieb angeordnet ist. Daraus ergibt sich der Vorteil, dass durch die unterschiedlichen Längenverhältnisse der Prüflingsaufnahme um den Lagerpunkt herum, d.h. durch Untersetzung des Dreharms, eine besonders feinfühlige Verdrehung der dem Kippspindeltrieb abgewandten Seite der zweiten Fläche möglich ist.

Gemäß einer weiteren bevorzugten Ausführungsform der Erfindung ist es vorgesehen, dass eine eingestellte Ausrichtung der zweiten Fläche gegenüber der ersten Fläche mittels Klemmschrauben fixierbar ist. Somit kann insbesondere im Betrieb des Antriebsstrangprüfstands sichergestellt werden, dass sich die Ausrichtung der Prüflingsaufnahme aufgrund von entstehenden Vibrationen oder wirkenden Kräften ungewollt verändert.

Gemäß einer weiteren bevorzugten Ausführungsform der Erfindung ist es vorgesehen, dass die Prüflingsaufnahme weiterhin einen Sockel umfasst, auf dem die erste Fläche verschiebefest und verkippfest angeordnet ist. Der Sockel ermöglicht es dabei, die Prüflingsaufnahme auf einer im Wesentlichen für den Antriebsstrangprüfstand geeigneten Höhe anzuordnen. Vorteilhaft ist der Sockel aus einem vergleichsweise steifen, schweren und schwingungsdämpfenden Material hergestellt, insbesondere aus einem Mineralguss, welcher sich sehr gut zur Schwingungsdämpfung eignet.

Nachfolgend wird die Erfindung anhand von in den Figuren dargestellten Ausführungsformen beispielhaft erläutert.

Es zeigen:
- Fig. 1: beispielhaft und schematisch eine mögliche Ausbildungsform eines erfindungsgemäßen Antriebsstrangprüfstands,
- Fig. 2: beispielhaft und schematisch eine mögliche Ausbildungsform einer erfindungsgemäßen Prüflingsaufnahme,
- Fig. 3: beispielhaft eine weitere mögliche Ausbildungsform einer erfindungsgemäßen Prüflingsaufnahme und
- Fig. 4: beispielhaft und schematisch als Querschnitt eine mögliche Ausbildungsform einer Wölbung, welche auf einer der zweiten Fläche 3 zugewandten Seitenkante eines Keils angeordnet ist.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

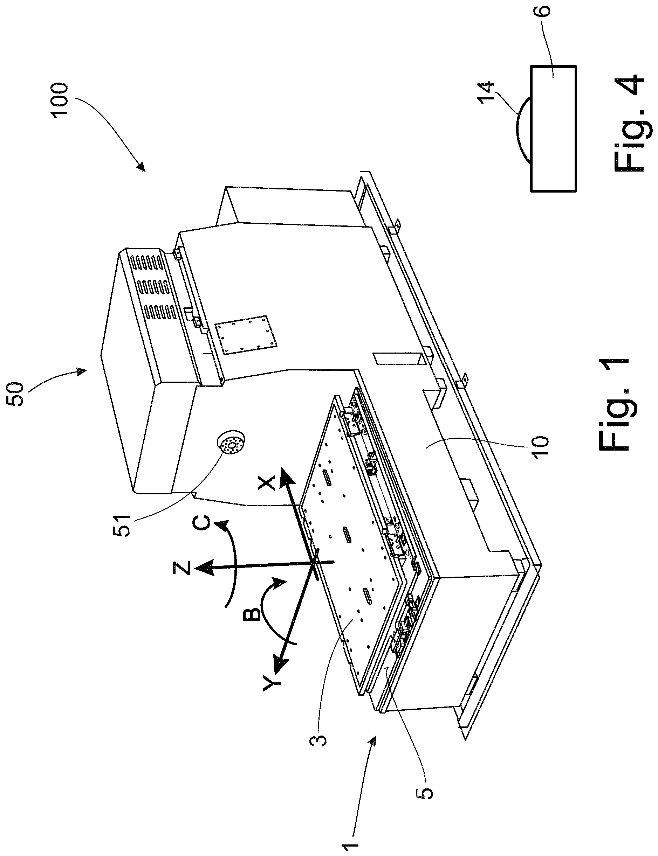

Fig. 1 zeigt beispielhaft und schematisch eine mögliche Ausbildungsform eines erfindungsgemäßen Antriebsstrangprüfstands 100. Der Antriebsstrangprüfstand 100 umfasst ein Antriebsmodul 50 und eine erfindungsgemäße Prüflingsaufnahme 1. Das Antriebsmodul 50 haust dabei einen in Fig. 1 nicht dargestellten Elektromotor ein, der über einen Flansch 51 einen ebenfalls in Fig. 1 nicht dargestellten Prüfling antreiben kann. Die Prüflingsaufnahme 1 und die Antriebseinheit 50 sind über einen gemeinsamen Sockel 10 miteinander verbunden, wodurch sich eine besonders steife und schwingungsdämpfende Verbindung ergibt. Beispielsgemäß besteht der Sockel 10 aus einem Mineralguss. Die Prüflingsaufnahme 1 umfasst weiterhin eine erste Fläche 5 und eine zweite Fläche 3, welche jeweils aus Stahl bestehen und in Fig. 1 parallel und übereinander angeordnet sind. Die erste Fläche 5 stellt dabei eine Unterseite der Prüflingsaufnahme 1 dar und ist verschiebefest und verkippfest auf dem Sockel 10 angeordnet. Mittels einer Vielzahl von Schlitzen und Öffnungen in der zweiten Fläche 3 kann eine Vielzahl von in Fig. 1 nicht dargestellten Halterungen zum Einspannen des Prüflings auf der zweiten Fläche 3 angeordnet werden. Die Prüflingsaufnahme 1 ist derart ausgebildet, dass die zweite Fläche 3 gegenüber der ersten Fläche 5 nicht nur entlang einer Längsachse X, einer Höhenachse Z und einer Querachse Y verstellbar ist, sondern gegenüber der ersten Fläche 5 auch um die Höhenachse und die Querachse kippbar ist. Die verschiedenen Achsen und Drehrichtungen werden in Fig. 1 über die Pfeile X, Y, Z, B und C veranschaulicht, wobei B eine Drehung um die Querachse Y anzeigt und C eine Drehung um die Höhenachse Z anzeigt.

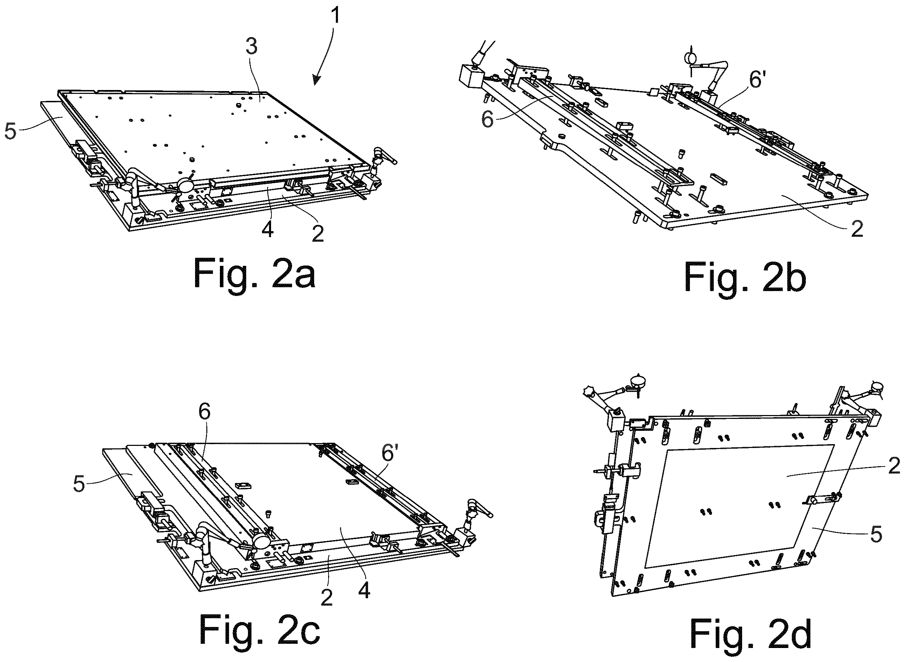

Fig. 2 zeigt beispielhaft und schematisch eine mögliche Ausbildungsform einer erfindungsgemäßen Prüflingsaufnahme 1. In Fig. 2a ist eine vollständig montierte Prüflingsaufnahme zu sehen, die erste Fläche 5, eine zweite Fläche 3, eine erste Zwischenplatte 4, eine zweite Zwischenplatte 2 und zwei Keile 6, 6' umfasst, wobei die Keile 6, 6' in Fig. 2a durch die zweite Fläche 3 verdeckt sind. Fig. 2b zeigt lediglich die erste Fläche 2 und die zwei Keile 6, 6', welche mittels Schrauben auf der ersten Fläche 2 gehalten sind. Da die Schrauben durch Längsschlitze der Keile 6, 6' geführt sind, sind die Keile 6, 6' jeweils entlang der Querachse Y verschiebbar. In Fig. 2c sind zusätzlich die erste Fläche 5 und die erste Zwischenplatte 4 dargestellt. Wie zu sehen ist, ist die zweite Zwischenplatte 2 auf der ersten Fläche 5 angeordnet. Die erste Zwischenplatte 4 beabstandet die Keile 6, 6' von der zweiten Zwischenplatte 2, ohne die Verschiebbarkeit der Keile 6, 6' zu beeinträchtigen. Die Keile 6, 6' können nach Maßgabe der Längsschlitze in den Keilen 6, 6' über die Oberfläche der ersten Zwischenplatte 4 verschoben werden. Die zweite Fläche 3 wird dann auf den Keilen 6, 6' angeordnet, ebenfalls ohne die Verschiebbarkeit der Keile 6, 6' einzuschränken. Je nachdem, wie weit die Keile 6, 6' verschoben werden, nimmt aufgrund der Keilform der Keile 6, 6' eine Beabstandung zwischen der zweiten Zwischenplatte 2 und der zweiten Fläche 3 zu. Die zweite Fläche 3 wird also entlang der Höhenachse Z gegenüber der ersten Fläche 5 verstellt. Fig. 2d schließlich zeigt eine Ansicht der Prüflingsaufnahme 1 von unten. Aufgrund der gewählten Ansicht sind nur die erste Fläche 5 und die zweite Zwischenplatte 2 zu sehen.

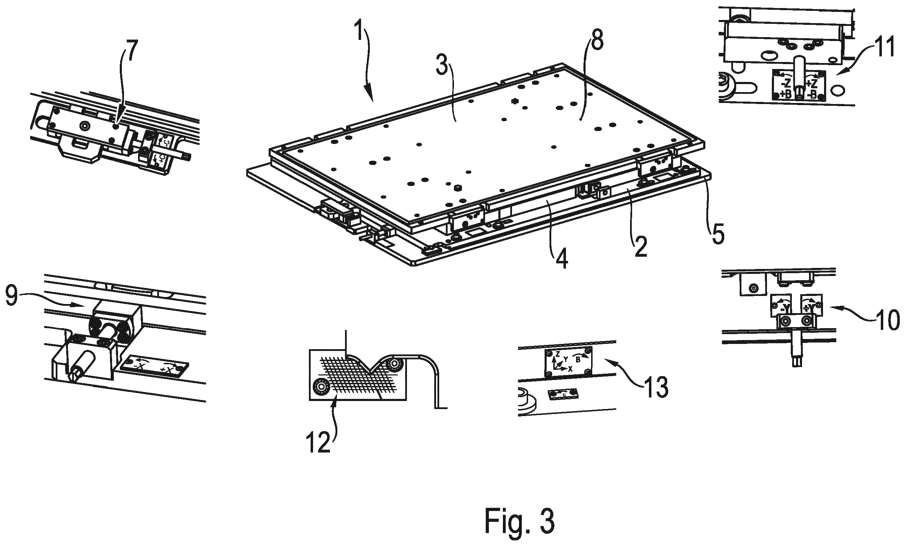

Fig. 3 zeigt beispielhaft eine weitere mögliche Ausbildungsform einer erfindungsgemäßen Prüflingsaufnahme 1. Die Prüflingsaufnahme 1 besteht auch in diesem Fall aus der ersten Fläche 5, der zweiten Fläche 3, der ersten Zwischenplatte 4, der zweiten Zwischenplatte 2 und zwei Keilen 6, 6', wobei die Keile 6, 6' wieder durch die zweite Fläche 3 verdeckt sind. In vergrößerten Einzelansichten sind in Fig. 3 dargestellt: Ein Kippspindeltrieb 7 zum Kippen der zweiten Fläche 3 über die zweite Zwischenplatte 2 gegenüber der ersten Fläche 5 um einen Lagerpunkt 8 um die Höhenachse Z, wobei der Lagerpunkt 8 in einem äußeren, vom Kippspindeltrieb 7 abgewandten Viertel in Längsrichtung der Prüflingsaufnahme 1 angeordnet ist. Weiterhin zu sehen ist ein Längsspindeltrieb 9 zum Verstellen der zweiten Fläche 3 über die zweite Zwischenplatte 2 gegenüber der ersten Fläche 5 entlang der Längsachse X. Ein Querspindeltrieb 10 ermöglicht ein Verstellen der zweiten Fläche 3 über die erste Zwischenplatte 4 gegenüber der ersten Fläche 5 entlang der Querachse Y. Mittels zweier Keilspindeltriebe 11 können zwei Keile 6, 6' entlang der Querachse Y verschoben werden, so dass sich die zweite Fläche 3 entlang der Höhenachse Z gegenüber der ersten Fläche 5 bewegt. Durch Verschieben nur eines Keils 6 oder 6' entlang der Querachse Y kann die zweite Fläche 3 um die Querachse Y gegenüber der ersten Fläche 5 gekippt werden. Mittels einer Positionsanzeige 12 kann eine Kippausrichtung um die Höhenachse Z der zweiten Fläche 3 gegenüber der ersten Fläche 5 bestimmt werden. Eine Koordinatenanzeige 13 schließlich unterstützt einen Bediener der Prüflingsaufnahme 1 bei der Justage der Prüflingsaufnahme 1, indem die Koordinatenanzeige die einzelnen Koordinatenachsen veranschaulicht und somit eine Zuordnung der Spindeltriebe7, 9, 10, 11 zu einer Verstellung entlang einer bestimmten Achse bzw. um eine bestimmte Achse vereinfacht.

Fig. 4 zeigt beispielhaft und schematisch als Querschnitt eine mögliche Ausbildungsform einer Wölbung 14, welche auf einer der zweiten Fläche 3 zugewandten Seitenkante eines Keils 6 angeordnet ist und sich zumindest anteilig über die Länge der Seitenkante erstreckt. Durch die Wölbung 14 ergibt sich eine nur schmale Kontaktlinie zwischen dem Keil 6 und der zweiten Fläche 3, die zudem auch bei einem unbeabsichtigten und nur geringfügigen seitlichen Verdrehen bzw. Verkanten des Keils 6 nicht dazu führt, dass sich die Ausrichtung der zweiten Fläche ändert.

### Bezugszeichen

- 1: Prüflingsaufnahme
- 2: zweite Zwischenplatte
- 3: zweite Fläche
- 4: erste Zwischenplatte
- 5: erste Fläche
- 6, 6': Keil
- 7: Kippspindeltrieb
- 8: Lagerpunkt
- 9: Längsspindeltrieb
- 10: Querspindeltrieb
- 11: Keilspindeltrieb
- 12: Positionsanzeige
- 13: Koordinatenanzeige
- 14: Wölbung
- 50: Antriebsmodul
- 51: Flansch
- 100: Antriebsstrangprüfstand
- X: Längsachse
- Y: Querachse
- Z: Höhenachse
- B: Drehung um die Querachse
- C: Drehung um die Höhenachse

### Bezugszeichen

- 1: Prüflingsaufnahme
- 2: zweite Zwischenplatte
- 3: zweite Fläche
- 4 6,: erste Zwischenplatte
- 5: erste Fläche
- 6': Keil
- 7: Kippspindeltrieb
- 8: Lagerpunkt
- 9: Längsspindeltrieb
- 10: Querspindeltrieb
- 11: Keilspindeltrieb
- 12: Positionsanzeige
- 13: Koordinatenanzeige
- 14: Wölbung
- 50: Antriebsmodul
- 51: Flansch
- 100: Antriebsstrangprüfstand
- X: Längsachse
- Y: Querachse
- Z: Höhenachse
- B: Drehung um die Querachse
- C: Drehung um die Höhenachse

## Patentansprüche

1. Antriebsstrangprüfstand (100) zum Prüfen eines elektrischen Fahrzeugantriebs, umfassend ein Antriebsmodul (50) und eine verstellbare Prüflingsaufnahme (1) für einen Antriebsstrangprüfstand (100), wobei die Prüflingsaufnahme (1) und das Antriebsmodul (50) über einen gemeinsamen Sockel (10) miteinander verbunden sind, wobei das Antriebsmodul (50) einen Elektromotor einhaust,
wobei die Prüflingsaufnahme (1) eine erste Fläche (5) und eine zur ersten Fläche (5) parallele zweite Fläche (3) aufweist, wobei die Prüflingsaufnahme (1) über die erste Fläche (5) auf einem Untergrund anordbar ist, wobei auf der zweiten Fläche (3) ein Prüfling anordbar ist und wobei die Prüflingsaufnahme (1) derart ausgebildet ist, dass die zweite Fläche (3) gegenüber der ersten Fläche (2) entlang einer Längsachse (X), einer Höhenachse (Z) und einer Querachse (Y) verstellbar ist und
wobei die Prüflingsaufnahme (1) weiterhin derart ausgebildet ist, dass die zweite Fläche (3) gegenüber der ersten Fläche (2) zumindest um die Höhenachse (Z) und die Querachse (Y) kippbar ist, wobei das Antriebsmodul (50) einen Flansch (51) umfasst, wobei der Elektromotor über den Flansch (51) den Prüfling antreiben kann und die zu koppelnden Achsen des Prüflings und des Elektroantriebs versatzfrei ausrichtbar sind.

2. Antriebsstrangprüfstand (100) nach Anspruch 1,
**dadurch gekennzeichnet, dass** die zweite Fläche (3) gegenüber der ersten Fläche (5) entlang der Höhenachse (Z) mittels mindestens zweier verschiebbarer Keile (6, 6') verstellbar ist.

3. Antriebsstrangprüfstand (100) nach mindestens einem der Ansprüche 1 und 2,
**dadurch gekennzeichnet, dass** die mindestens zwei verschiebbaren Keile (6, 6') an der ersten Fläche (5) oder an der zweiten Fläche (3) verschiebefest angeordnet sind und an der jeweils anderen Fläche (5, 3) auf einer dafür vorgesehenen Schräge verschiebbar sind, so dass ein Verschieben der mindestens zwei Keile (6, 6') gleichzeitig zu einem Verstellen der ersten Fläche (5) entlang der Höhenachse (Z) und entlang der Querachse (Y) oder der Längsachse (X) führt.

4. Antriebsstrangprüfstand (100) nach mindestens einem der Ansprüche 1 und 2,
**dadurch gekennzeichnet, dass** die mindestens zwei Keile (6, 6') auf einer ersten Zwischenplatte (4) angeordnet sind, wobei die erste Zwischenplatte (4) insbesondere eine Schrägung auf ihrer Oberseite aufweist, welcher einer Schrägung der Keile (6, 6') derart entgegengesetzt entspricht, dass eine Unterseite der ersten Zwischenplatte (4) und jeweils eine lange Seitenkante der mindestens zwei Keile (6, 6') parallel zueinander sind.

5. Antriebsstrangprüfstand (100) nach mindestens einem der Ansprüche 2 bis 4,
**dadurch gekennzeichnet, dass** die mindestens zwei Keile (6, 6') jeweils auf ihrer der zweiten Fläche (3) zugewandten Seitenkante eine sich über die Seitenkante erstreckende Wölbung (14) aufweisen.

6. Antriebsstrangprüfstand (100)) nach mindestens einem der Ansprüche 2 bis 5,
**dadurch gekennzeichnet, dass** eine Position der mindestens zwei Keile (6, 6') mittels mindestens eines Tiefenmessschiebers erfassbar ist.

7. Antriebsstrangprüfstand (100) nach mindestens einem der Ansprüche 1 bis 6,
**dadurch gekennzeichnet, dass** die zweite Fläche (3) gegenüber der ersten Fläche (5) entlang der Längsachse (X) mittels eines Längsspindeltriebs (9) und entlang der Querachse (Y) mittels eines Querspindeltriebs (10) verstellbar ist.

8. Antriebsstrangprüfstand (100)) nach mindestens einem der Ansprüche 1 bis 7,
**dadurch gekennzeichnet, dass** die zweite Fläche (3) gegenüber der ersten Fläche (5) mittels mindestens eines Keils (6, 6') der mindestens zwei Keile (6, 6') um die Querachse (Y) kippbar ist.

9. Antriebsstrangprüfstand (100) nach mindestens einem der Ansprüche 1 bis 8,
**dadurch gekennzeichnet, dass** die zweite Fläche (3) gegenüber der ersten Fläche (1) mittels eines Kippspindeltriebs (7) um einen Lagerpunkt (8) um die Höhenachse (Z) kippbar ist.

10. Antriebsstrangprüfstand (100) nach Anspruch 9,
**dadurch gekennzeichnet, dass** Lagerpunkt als Drehlagerung zwischen der ersten Fläche (5) und einer zweiten Zwischenplatte (2) oder zwischen der zweiten Fläche (3) und der zweiten Zwischenplatte (2) vorgesehen ist.

11. Antriebsstrangprüfstand (100) nach mindestens einem der Ansprüche 9 und 10,
**dadurch gekennzeichnet, dass** der Lagerpunkt (8) in einem äußeren Viertel der Länge der Prüflingsaufnahme (1) angeordnet ist.

12. Antriebsstrangprüfstand (100) nach mindestens einem der Ansprüche 1 bis 11,
**dadurch gekennzeichnet, dass** eine eingestellte Ausrichtung der zweiten Fläche (3) gegenüber der ersten Fläche (5) mittels Klemmschrauben fixierbar ist.

13. Antriebsstrangprüfstand (100) nach mindestens einem der Ansprüche 1 bis 12,
**dadurch gekennzeichnet, dass** die Prüflingsaufnahme (1) weiterhin einen Sockel (12) umfasst, auf dem die erste Fläche (5) verschiebefest und verkippfest angeordnet ist.

## Claims

1. Drivetrain test bench (100) for testing an electric vehicle drive, comprising a drive module (50) and an adjustable test object holder (1) for a drivetrain test bench (100), wherein the test object holder (1) and the drive module (50) are connected to one another via a joint base (10),
wherein the drive module (50) encloses an electric motor,
wherein the test object holder (1) has a first surface (5) and a second surface (3) parallel to the first surface (5), wherein the test object holder (1) can be arranged on a base via the first surface (5), wherein a test object can be arranged on the second surface (3), and wherein the test object holder (1) is formed such that the second surface (3) is adjustable relative to the first surface (2) along a longitudinal axis (X), a vertical axis (Z), and a transverse axis (Y), and
wherein the test object holder (1) is further formed such that the second surface (3) is tiltable relative to the first surface (2) at least about the vertical axis (Z) and the transverse axis (Y), wherein the drive module (50) comprises a flange (51),
wherein the electric motor can drive the test object via the flange (51) and the axes to be coupled of the test object and of the electric drive can be aligned in an offset-free manner.

2. Drivetrain test bench (100) according to Claim 1,
**characterized in that** the second surface (3) is adjustable relative to the first surface (5) along the vertical axis (Z) by means of at least two displaceable wedges (6, 6').

3. Drivetrain test bench (100) according to at least one of Claims 1 and 2,
**characterized in that** the at least two displaceable wedges (6, 6') are arranged on the first surface (5) or on the second surface (3) in a displaceably fixed manner and are displaceable on the respective other surface (5, 3) on a slope provided for this purpose, so that a displacement of the at least two wedges (6, 6') simultaneously leads to an adjustment of the first surface (5) along the vertical axis (Z) and along the transverse axis (Y) or the longitudinal axis (X).

4. Drivetrain test bench (100) according to at least one of Claims 1 and 2,
**characterized in that** the at least two wedges (6, 6') are arranged on a first intermediate plate (4), wherein the first intermediate plate (4) has in particular a bevel on its upper side, which corresponds oppositely to a bevel of the wedges (6, 6') such that a lower side of the first intermediate plate (4) and a respective long side edge of the at least two wedges (6, 6') are parallel to one another.

5. Drivetrain test bench (100) according to at least one of Claims 2 to 4,
**characterized in that** the at least two wedges (6, 6') each have, on their side edge facing the second surface (3), a curvature (14) extending over the side edge.

6. Drivetrain test bench (100) according to at least one of Claims 2 to 5,
**characterized in that** a position of the at least two wedges (6, 6') can be detected by means of at least one depth gauge.

7. Drivetrain test bench (100) according to at least one of Claims 1 to 6,
**characterized in that** the second surface (3) is adjustable relative to the first surface (5) along the longitudinal axis (X) by means of a longitudinal spindle drive (9) and along the transverse axis (Y) by means of a transverse spindle drive (10).

8. Drivetrain test bench (100) according to at least one of Claims 1 to 7,
**characterized in that** the second surface (3) can be tilted relative to the first surface (5) by means of at least one wedge (6, 6') of the at least two wedges (6, 6') about the transverse axis (Y).

9. Drivetrain test bench (100) according to at least one of Claims 1 to 8,
**characterized in that** the second surface (3) can be tilted relative to the first surface (1) by means of a tilting spindle drive (7) about a bearing point (8) about the vertical axis (Z).

10. Drivetrain test bench (100) according to Claim 9,
**characterized in that** the bearing point is provided as a pivot bearing between the first surface (5) and a second intermediate plate (2) or between the second surface (3) and the second intermediate plate (2).

11. Drivetrain test bench (100) according to at least one of Claims 9 and 10,
**characterized in that** the bearing point (8) is arranged in an outer quarter of the length of the test object holder (1).

12. Drivetrain test bench (100) according to at least one of Claims 1 to 11,
**characterized in that** a set alignment of the second surface (3) relative to the first surface (5) can be fixed by means of clamping screws.

13. Drivetrain test bench (100) according to at least one of Claims 1 to 12,
**characterized in that** the test object holder (1) further comprises a base (12) on which the first surface (5) is arranged in a fixed manner in terms of displacement and tilting.

## Revendications

1. Banc d'essai (100) pour chaîne cinématique pour tester une transmission de véhicule électrique, comprenant un module d'entraînement (50) et un support réglable (1) d'objet à tester pour un banc d'essai (100) pour chaîne cinématique, le support (1) d'objet à tester et le module d'entraînement (50) étant reliés l'un à l'autre par un socle commun (10), le module d'entraînement (50) abritant un moteur électrique,
le support (1) d'objet à tester comprenant une première surface (5) et une deuxième surface (3) parallèle à la première surface (5), le support (1) d'objet à tester étant apte à être agencé sur une surface d'appui via la première surface (5), un objet à tester étant apte à être agencé sur la deuxième surface (3) et le support (1) d'objet à tester étant conçu de telle sorte que la deuxième surface (3) est réglable par rapport à la première surface (2) le long d'un axe longitudinal (X), d'un axe de hauteur (Z) et d'un axe transversal (Y) et
le support (1) d'objet à tester étant en outre conçu de telle sorte que la deuxième surface (3) est inclinable par rapport à la première surface (2) au moins autour de l'axe de hauteur (Z) et de l'axe transversal (Y), le module d'entraînement (50) comprenant une bride (51), le moteur électrique étant apte à entraîner l'objet à tester par l'intermédiaire de la bride (51) et les axes à relier de l'objet à tester et de l'entraînement électrique étant aptes à être alignés sans décalage.

2. Banc d'essai (100) pour chaîne cinématique selon la revendication 1,
**caractérisé en ce que** la deuxième surface (3) est réglable par rapport à la première surface (5) le long de l'axe de hauteur (Z) au moyen d'au moins deux cales coulissantes (6, 6').

3. Banc d'essai (100) pour chaîne cinématique selon au moins une des revendications 1 et 2,
**caractérisé en ce que** lesdits au moins deux cales coulissantes (6, 6') sont agencées de manière fixe sur la première surface (5) ou sur la deuxième surface (3) et sont aptes à coulisser sur l'autre surface (5, 3) sur une surface inclinée prévue à cet effet, de telle sorte qu'un déplacement desdites au moins deux cales (6, 6') entraîne simultanément un réglage de la première surface (5) le long de l'axe vertical (Z) et le long de l'axe transversal (Y) ou de l'axe longitudinal (X).

4. Banc d'essai (100) pour chaîne cinématique selon au moins une des revendications 1 et 2,
**caractérisé en ce que** lesdites au moins deux cales (6, 6') sont agencées sur une première plaque intermédiaire (4), ladite première plaque intermédiaire (4) comprenant notamment un biseau sur sa face supérieure, qui correspond à un biseau des cales (6, 6') de telle sorte qu'une face inférieure de la première plaque intermédiaire (4) et un bord latéral long respectif desdites au moins deux cales (6, 6') sont parallèles l'un à l'autre.

5. Banc d'essai (100) pour chaîne cinématique selon au moins une des revendications 2 à 4,
**caractérisé en ce que** lesdites au moins deux cales (6, 6') comprennent chacune, sur leur bord latéral tourné vers la deuxième surface (3), un renflement (14) s'étendant au-delà du bord latéral.

6. Banc d'essai (100) pour chaîne cinématique selon au moins une des revendications 2 à 5,
**caractérisé en ce qu'**une position desdites au moins deux cales (6, 6') est apte à être détectée au moyen d'au moins un palpeur de profondeur.

7. Banc d'essai (100) pour chaîne cinématique selon au moins une des revendications 1 à 6,
**caractérisé en ce que** la deuxième surface (3) est réglable par rapport à la première surface (5) selon l'axe longitudinal (X) au moyen d'un mécanisme d'entraînement à broche longitudinale (9) et selon l'axe transversal (Y) au moyen d'un mécanisme d'entraînement à broche transversale (10).

8. Banc d'essai (100) pour chaîne cinématique selon au moins une des revendications 1 à 7,
**caractérisé en ce que** la deuxième surface (3) est apte à être inclinée par rapport à la première surface (5) autour de l'axe transversal (Y) au moyen d'au moins un coin (6, 6') parmi lesdits au moins deux coins (6, 6').

9. Banc d'essai (100) pour chaîne cinématique selon au moins une des revendications 1 à 8,
**caractérisé en ce que** la deuxième surface (3) est apte à être inclinée par rapport à la première surface (1) au moyen d'un mécanisme d'entraînement à broche d'inclinaison (7) autour d'un point d'appui (8) autour de l'axe de hauteur (Z).

10. Banc d'essai (100) pour chaîne cinématique selon la revendication 9,
**caractérisé en ce que** le point d'appui est prévu sous forme de palier pivotant entre la première surface (5) et une deuxième plaque intermédiaire (2) ou entre la deuxième surface (3) et la deuxième plaque intermédiaire (2).

11. Banc d'essai (100) pour chaîne cinématique selon au moins une des revendications 9 et 10,
**caractérisé en ce que** le point d'appui (8) est agencé dans un quart extérieur de la longueur du support (1) d'objet à tester.

12. Banc d'essai (100) pour chaîne cinématique selon au moins une des revendications 1 à 11,
**caractérisé en ce qu'**un alignement défini de la deuxième surface (3) par rapport à la première surface (5) est apte à être fixé au moyen de vis de serrage.

13. Banc d'essai (100) pour chaîne cinématique selon au moins une des revendications 1 à 12,
**caractérisé en ce que** le support (1) d'objet à tester comprend en outre un socle (12) sur lequel la première surface (5) est agencée de manière à être immobile en translation et en inclinaison.
